# EUROPÄISCHE PATENTSCHRIFT

(11) **EP 2 637 748 B1**
(45) Veröffentlichungstag und Bekanntmachung des Hinweises auf die Patenterteilung: **29.03.2017**
(21) Anmeldenummer: 11805386.7
(22) Anmeldetag: 10.11.2011
(51) Int. Cl.: A62C 4/02, F16K 35/04, F16K 17/04

(54) **SICHERHEITSARMATUR**
SAFETY FITTING
FERRURE DE SÉCURITÉ

(30) Priorität: 10.11.2010 DE 102010050781
(43) Veröffentlichungstag der Anmeldung: 18.09.2013
(73) Patentinhaber: Becker, Dominic, 59519 Möhnesee (DE)
(72) Erfinder: Becker, Dominic, 59519 Möhnesee (DE)
(74) Vertreter: Griepenstroh, Jörg
(86) Internationale Anmeldenummer: PCT/DE2011/001961
(87) Internationale Veröffentlichungsnummer: WO 2012/062284

(56) Entgegenhaltungen:
- DE-A1- 19 837 146
- DE-C1- 19 912 326
- GB-A- 1 044 888
- US-A- 2 440 478

## Beschreibung

Die Erfindung betrifft eine Sicherheitsarmatur zur Integration in eine Fluidleitung gemäß den Merkmalen im Oberbegriff des Anspruchs 1.

Eine solche Sicherheitsarmatur ist im Umfang der WO 2006/120091 bekannt. Sie weist in einem erweiterten Abschnitt eines mit Dichtsitzen versehenen Gehäuses einen beidseitig von Federn eingespannten Sperrkörper auf. Einsatzgebiet derartiger Sicherheitsarmaturen sind Fluidleitungen zum Transport insbesondere von Gasen sowie von feinkörnigen Feststoffen (Stäube).

Um in diesem Zusammenhang zum Beispiel integrierte Filteranlagen durch eine schnelle Absperrung der Fluidleitungen gegen plötzliche Druckanstiege zu schützen, wird eine Sicherheitsarmatur mit geradem Durchgang eingesetzt. Damit möglichst kein oder nur ein sehr geringer Strömungsverlust eintritt, ist der Sperrkörper mittig eines strömungstechnisch erweiterten Abschnitts eines neben dem Abschnitt zwei Rohrstutzen aufweisenden Gehäuses quasi schwimmend gelagert. Die Sicherheitsarmatur soll selbstständig schließen, sobald der maximale zulässige Druck bzw. die maximal zulässige Strömungsgeschwindigkeit überschritten werden. Die Mittelstellung des Sperrkörpers wird von Federn bestimmt, deren Federkraft exakt auf die jeweils theoretisch berechnete Strömungsgeschwindigkeit eingestellt ist. Stimmt das tatsächliche Strömungsverhältnis nicht mit dem theoretischen Wert überein, kann die Sicherheitsarmatur nicht richtig auslösen. In diesem Fall müssen der Sperrkörper und/auch die Federn ausgebaut und ein neuer Federsatz eingesetzt werden. Dadurch kann sich die Inbetriebnahme einer Sicherheitsarmatur einschließlich der hiermit in Verbindung stehenden Gesamtanlage deutlich verzögern. Das ist insbesondere dann der Fall, wenn der entsprechende Federsatz vor Ort nicht zur Verfügung steht. Eine externe Eingriffsmöglichkeit zur Veränderung der Federvorspannung besteht nicht und ist auch nur mit erheblichem technischen Aufwand - und das nur bedingt - vorstellbar.

GB 1 044 888 A offenbart eine Sicherheitsarmatur mit geradem Durchgang, die mittels Federn in einer mittigen Offenlage gehalten wird. Die Kraft der Federn kann mittels einer drehbaren Mutter justiert werden.

Den gleichen Einfluss auf die Federkrafteinstellung hat auch das Gewicht des Sperrkörpers mit seinen auf der Mittelachse des Gehäuses beweglichen Teilen bei allen von der Waagerechten abweichenden Einbaulagen bis hin zur maximalen Belastung in der Senkrechten.

Es ist somit wichtig, auch bei Schwankungen innerhalb des zulässigen Drucks bzw. der zulässigen Strömungsgeschwindigkeit die dann gegebenenfalls eintretenden Veränderungen der Mittelstellung des Sperrkörpers zu vermeiden, um Verengungen des Strömungsquerschnitts zu unterbinden.

Zum Stand der Technik ist auf die US 2,440,478 A hinzuweisen, die ein hydraulisches Wechselventil beschreibt. Der Ventilkörper des Wechselventils kann in zwei Ventillagen verlagert werden und unterschiedliche Strömungswege freigeben. In den jeweiligen Ventillagen kann der Ventilkörper über einen federbelasteten Sperrkörper lagepositioniert sein.

Der Erfindung liegt die Aufgabe zugrunde, eine Sicherheitsarmatur zur Integration in eine Fluidleitung derart weiterzuentwickeln, dass bei Schwankungen des Drucks und/oder der Strömungsgeschwindigkeit innerhalb der zulässigen Werte ohne kompletten Ausbau des Sperrkörpers und der Federn eine problemlose Positionierung der Mittelstellung des Sperrkörpers gewährleistet werden kann.

Die Lösung dieser Aufgabe besteht nach der Erfindung in den Merkmalen des Anspruchs 1.

Vorteilhafte Weiterbildungen der Erfindung sind Gegenstand der Ansprüche 2 bis 13.

Wesentlich an der Erfindung ist demnach, dass in der Offenstellung, also in der neutralen Mittelstellung, der Sperrkörper von mindestens einer quer zu seiner Bewegungsrichtung wirksamen Rasteinheit einwandfrei lagepositioniert ist, die von außen, d.h. ohne die Fluidleitung zu öffnen, einstellbar ist. Eine auf das Rastglied der Rasteinheit einwirkende Rastkraft ist in der Einbaulage, d.h. dann, wenn kein Zugriff mehr auf das Innere der Sicherheitsarmatur besteht, von außerhalb der Sicherheitsarmatur einstellbar.

Aufgrund dieser Maßnahme wird mithin der Sperrkörper von der Rasteinheit solange in seiner neutralen Mittelstellung (Offenstellung) positioniert, wie der maximal zulässige Druck bzw. die maximal zulässige Strömungsgeschwindigkeit im System nicht überschritten wird. Die Rasteinheit hält den Sperrkörper einwandfrei in seiner neutralen Mittelstellung. Wenn jedoch der Druck beziehungsweise die Strömungsgeschwindigkeit im Rohrleitungssystem plötzlich ansteigen und bestrebt sind, den Sperrkörper zu verlagern, wird die Haltekraft der Rasteinheit überwunden und die neutrale Position des Sperrkörpers aufgehoben. Der Sperrkörper kann zwecks Absperrung der Fluidleitung sicher auf einen der Dichtsitze verlagert werden.

Die Haltekraft der Rasteinheit wird im Wesentlichen durch die Größe der Sicherheitsarmatur, durch die Strömungsgeschwindigkeit (Förderdruck) und durch die Einbaulage bestimmt.

Es genügt prinzipiell eine Rasteinheit, um den Sperrkörper in der Offenstellung zu halten. Um jedoch ungleichmäßige Querbelastungen zu vermeiden, sind vorzugsweise zwei diametral einander gegenüberliegende Rasteinheiten vorgesehen.

Eine zweckmäßige Ausgestaltung der Erfindung sieht vor, dass die Rasteinheit eine auf ein kugelförmiges Rastglied einwirkende Druckfeder, insbesondere eine Schraubendruckfeder, aufweist.

Umfangsseitig des Sperrkörpers ist dann eine an das Rastglied angepasste Ausnehmung vorgesehen. Diese Ausbildung gewährleistet eine einwandfreie Positionierung des Sperrkörpers innerhalb der zulässigen Druck- und Strömungswerte. Werden diese Werte überschritten, erfolgt eine Verlagerung des Rastglieds gegen die Rückstellkraft der Druckfeder, so dass der Sperrkörper in eine Schließstellung verlagert werden kann.

Die Ausnehmung ist zweckmäßig als Umfangsnut an dem Sperrkörper ausgebildet.

Des Weiteren ist es von Vorteil, dass das Rastglied in einer endseitigen Kammer einer quer zur Bewegungsrichtung des Sperrkörpers am Gehäuse festgelegten länglichen Hülse unverlierbar gehalten ist, welche ferner in einem Längskanal die einstellbare Druckfeder aufnimmt. Eine derartige Rasteinheit ist einfach herzustellen und leicht sowie sicher am Gehäuse der Sicherheitsarmatur lösbar festzulegen.

Zum Spannen der Druckfeder und damit zur Bestimmung der gesicherten Offenposition des Sperrkörpers ist ein in Längsrichtung der Hülse verlagerbarer Schraubbolzen vorgesehen. Der Schraubbolzen ist an dem dem Rastglied gegenüberliegenden Ende der Hülse drehbar gelagert. Durch Verdrehung des Schraubbolzens wird die Druckfeder gespannt oder entlastet und gegen das Rastglied gedrückt, welches dann in die Ausnehmung am Sperrkörper eingreift.

Die einstellbare Spannkraft der Druckfeder mittels des Schraubbolzens ist dadurch gesichert, dass der Schraubbolzen mittels einer Kontermutter lagefixierbar ist.

Zur visuellen Darstellung der Spannkraft kann im Bereich des Schraubbolzens eine Einstellskala vorgesehen sein.

Das Rastglied ist bevorzugt gehärtet. Es sollte nicht korrodierend sein oder durch Schwingungen des Sperrkörpers im Strömungskanal verschleißen. Demnach soll das Rastglied eine größere Härte aufweisen als die Oberfläche der Ausnehmung am Sperrkörper.

Die sichere Lage des Rastglieds endseitig der Hülse wird dadurch gewährleistet, dass die dem Sperrkörper zugewandte stirnseitige Öffnung der das Rastglied aufnehmenden Kammer kleiner als der Durchmesser des Rastglieds bemessen ist. Hierdurch ist nicht nur das Rastglied unverlierbar in der Kammer gehalten, sondern es wird auch sichergestellt, dass der Oberflächenbereich des Rastglieds, der über die Öffnung nach außen tritt und mit der Ausnehmung im Sperrkörper zusammenwirkt, ausreichend groß genug ist, um die gewünschte Verrastung am Sperrkörper sicherzustellen. Der Rand der Öffnung kann durch Bördeln ringschneidenartig ausgebildet sein.

In Weiterbildung der Erfindung ist der Sperrkörper doppelkonisch mit mittigem Zylinderabschnitt gestaltet und die Dichtsitze sind an neben dem erweiterten Abschnitt des Gehäuses sich erstreckenden Rohrstutzen ausgebildet. Hiermit kann im Zusammenwirken mit dem Sperrkörper eine flammendurchschlagssichere Spaltdichtung geschaffen werden. Die Spaltbreite darf maximal 0,5 mm betragen. Die Spaltlänge sollte mindestens 20 mm bemessen sein.

Zusätzlich kann auch noch ein Dichtring entweder an den Dichtsitzen oder am Sperrkörper vorgesehen sein, mit dessen Hilfe die Spaltbreite quasi auf 0 reduziert werden kann. Bei einem entsprechend gestalteten Elastomerdichtring kann bei gewünschter Gasdichte auch eine Spaltbreite von -0,2 mm erreicht werden. Mit Einsatz unterschiedlicher Dichtungsformen und Qualitäten, ob fest oder auch aufblasbar, kann damit jeder gewünschte Dichtungsgrad im Strömungsdurchgang des jeweiligen Fluids erreicht werden.

Die Erfindung ist nachfolgend anhand von in den Zeichnungen dargestellten Ausführungsbeispielen näher erläutert. Es zeigen:
- Figur 1: im schematischen Längsschnitt eine Sicherheitsarmatur und
- Figur 2: in vergrößerter Darstellung in der Ansicht, teilweise im Schnitt, eine Bestandteil der Sicherheitsarmatur bildende Rasteinheit.

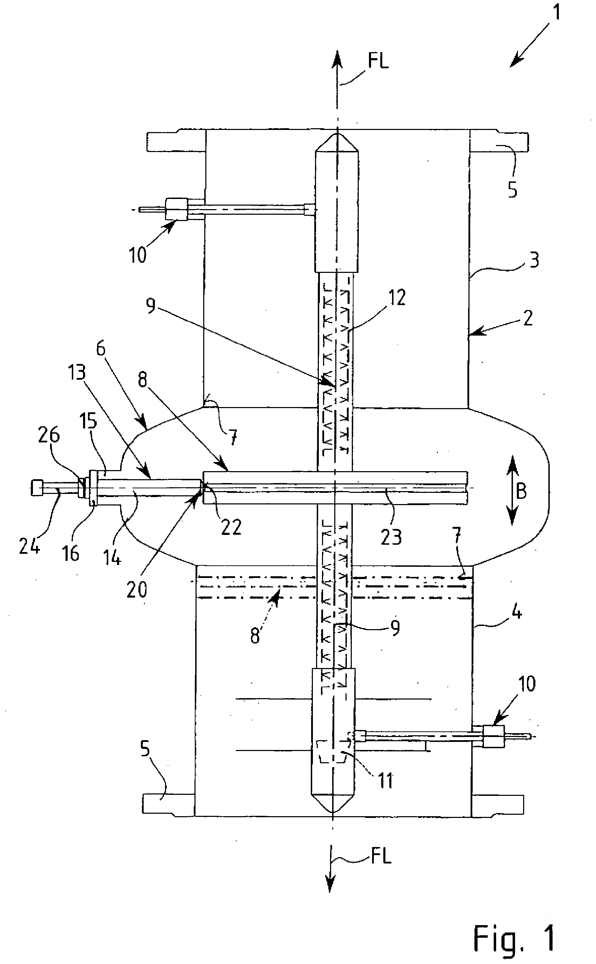

Die Sicherheitsarmatur 1 der Figur 1 ist zur Integration in eine Fluide, wie zum Beispiel Gase oder feinkörnige Feststoffe (Stäube) führende Fluidleitung vorgesehen (mittels der Pfeile FL angedeutet). Sie weist ein Gehäuse 2 auf, das zwei Rohrstutzen 3, 4 mit endseitigen Flanschen 5 und einen zwischen den Rohrstutzen 3, 4 vorgesehenen erweiterten Abschnitt 6 umfasst. Im Bereich der Übergänge von den Rohrstutzen 3, 4 auf den erweiterten Abschnitt 6 sind Dichtsitze 7 vorgesehen.

In Längsrichtung der Sicherheitsarmatur 1 ist im erweiterten Abschnitt 6 ein scheibenförmiger Sperrkörper 8 verlagerbar angeordnet. Dieser Sperrkörper 8 ist zwischen Federn 9 eingespannt.

Die Dichtsitze 7 oder der Sperrkörper 8 können mit nicht näher veranschaulichten Dichtringen versehen sein.

Bei unzulässiger Druck- oder Strömungserhöhung in der Fluidleitung FL und damit auch in dem Gehäuse 2 wird der Sperrkörper 8 in Bewegungsrichtung B neben einen der Dichtsitze 7 verlagert und in dieser Position mit Hilfe von Feststellvorrichtungen 10 gesichert. Diese sind manuell wieder lösbar. Im Bereich des Rohrstutzens 4 ist die Lage des Sperrkörpers 8 in der Schließposition und auch die Verriegelung einer Feststellvorrichtung 10 mit einem Konus 11 an einer Führungsstange 12 für den Sperrkörper 8 schematisch veranschaulicht.

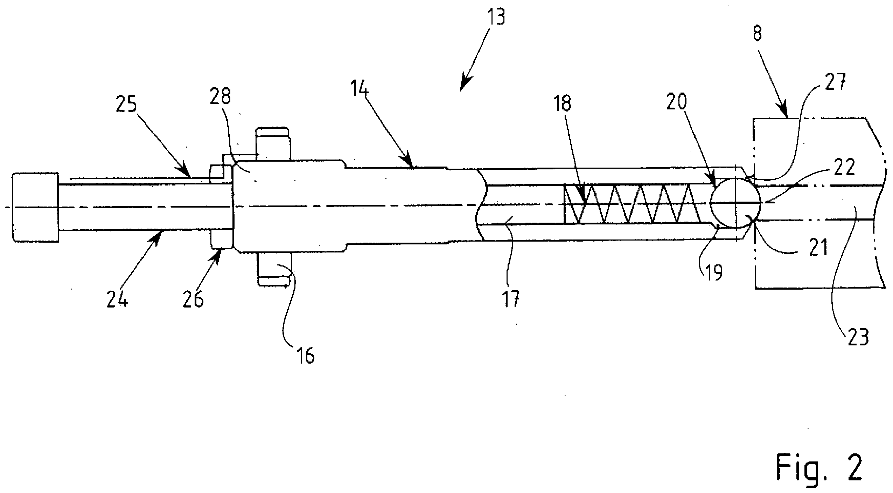

Der Sperrkörper 8 ist in der dargestellten neutralen Mittelstellung (Offenposition der Sicherheitsarmatur 1) mit Hilfe einer aus der Figur 2 näher erkennbaren Rasteinheit 13 gehalten, um bei Schwankungen innerhalb der zulässigen der Druck- und Strömungswerte eine damit verbundene Verlagerung des Sperrkörpers 8 mit Verengung des Strömungsdurchgangs im erweiterten Abschnitt 6 zu vermeiden.

Die Rasteinheit 13 umfasst eine längliche Hülse 14, die am erweiterten Abschnitt 6 in einen vorspringenden Stutzen 15 geschraubt (Figur 1) und mit Hilfe einer Mutter 16 fixiert wird. In der Hülse 14 befindet sich ein Längskanal 17, in dem eine Schraubendruckfeder 18 angeordnet ist. An dem dem Sperrkörper 8 zugewandten Ende 27 der Hülse 14 ist eine im Durchmesser erweiterte Kammer 19 zur Aufnahme eines kugelförmigen Rastglieds 20 vorgesehen. Dieses Rastglied 20 ist in der Kammer 19 dadurch sicher gehalten, dass die Öffnung 21 am Ende 27 der Hülse 14 kleiner als der Durchmesser des Rastglieds 20 bemessen ist. Diese Öffnung 21 kann durch Umformung (Bördeln) des ringschneidenartig zulaufenden Endes 27 der Hülse 14 gebildet sein. Dennoch steht das Rastglied 20 mit einem ausreichend großen Oberflächenbereich 22 gegenüber der Hülse 14 vor, um in eine Umfangsnut 23 des Sperrkörpers 8 eingerastet werden zu können.

Die hierzu notwendige Kraft der Schraubendruckfeder 18 wird mit Hilfe eines Schraubbolzens 24 eingestellt, der am anderen Ende 28 der Hülse 14 in den hier mit einem nicht näher erkennbaren Gewinde versehenen Längskanal 17 eindrehbar ist. Die Größe der Federkraft kann an einer Einstellskala 25 abgelesen werden. Die eingestellte Position des Schraubbolzens 24 und damit der Federkraft der Schraubendruckfeder 18 ist mittels einer Kontermutter 26 gesichert.

### Bezugszeichen:

- 1 -: Sicherheitsarmatur
- 2 -: Gehäuse
- 3 -: Rohrstutzen
- 4 -: Rohrstutzen
- 5 -: Flansche
- 6 -: Abschnitt zw. 3 u. 4
- 7 -: Dichtsitze
- 8 -: Sperrkörper
- 9 -: Federn
- 10 -: Feststellvorrichtungen
- 11 -: Konus
- 12 -: Führungsstange
- 13 -: Rasteinheit
- 14 -: Hülse v. 13
- 15 -: Stutzen an 6
- 16 -: Mutter
- 17 -: Längskanal in 14
- 18 -: Schraubendruckfeder
- 19 -: Kammer
- 20 -: Rastglied
- 21 -: Öffnung in 27
- 22 -: Oberflächenbereich v. 20
- 23 -: Umfangsnute an 8
- 24 -: Schraubbolzen
- 25 -: Einstellskala
- 26 -: Kontermutter
- 27 -: Ende v. 14
- 28 -: Ende v. 14
- FL -: Fluidleitung
- B -: Bewegungsrichtung v. 8

## Patentansprüche

1. Sicherheitsarmatur (1) zur Integration in eine Fluidleitung (FL) mit einem Gehäuse (2), das einen geraden Durchgang besitzt, wobei das Gehäuse (2) zwei Rohrstutzen (3, 4) und einen erweiterten Abschnitt (6) zwischen den Rohrstutzen (3, 4) besitzt, wobei das Gehäuse (2) Dichtsitze (7) für einen Sperrkörper (8) aufweist, welcher in dem erweiterten Abschnitt (6) angeordnet ist und beidseitig von Federn (9) eingespannt in einer neutralen Mittelstellung als Offenstellung der Sicherheitsarmatur gehalten ist und wobei der Sperrkörper (8) von mindestens einer quer zu seiner Bewegungsrichtung (B) wirksamen Einheit (13) in der Offenstellung lagepositioniert ist, **dadurch gekennzeichnet, dass** die Einheit (13) eine Rasteinheit (13) ist, wobei die Rasteinheit (13) ein Rastglied (20) umfasst, das mit einer in der Einbaulage von außerhalb der Sicherheitsarmatur (1) einstellbaren Rastkraft beaufschlagt ist.

2. Sicherheitsarmatur nach Anspruch 1, **dadurch gekennzeichnet, dass** zwei diametral einander gegenüberliegende Rasteinheiten (13) vorgesehen sind.

3. Sicherheitsarmatur nach Anspruch 1 oder 2, **dadurch gekennzeichnet, dass** jede Rasteinheit (13) eine auf ein kugelförmiges Rastglied (20) einwirkende Druckfeder (18) aufweist.

4. Sicherheitsarmatur nach Anspruch 3, **dadurch gekennzeichnet, dass** umfangsseitig des Sperrkörpers (8) eine an das Rastglied (20) angepasste Ausnehmung (23) vorgesehen ist.

5. Sicherheitsarmatur nach Anspruch 4, **dadurch gekennzeichnet, dass** die Ausnehmung (23) als Umfangsnut ausgebildet ist.

6. Sicherheitsarmatur nach einem der Ansprüche 3 bis 5, **dadurch gekennzeichnet, dass** das Rastglied (20) in einer endseitigen Kammer (19) einer quer zur Bewegungsrichtung (B) des Sperrkörpers (8) am Gehäuse (2) festgelegten länglichen Hülse (14) unverlierbar gehalten ist, welche ferner in einem Längskanal (17) die einstellbare Druckfeder (18) aufnimmt.

7. Sicherheitsarmatur nach einem der Ansprüche 3 bis 6, **dadurch gekennzeichnet, dass** die Druckfeder (18) mittels eines in Längsrichtung der Hülse (14) verlagerbaren Schraubbolzens (24) spannbar ist.

8. Sicherheitsarmatur nach Anspruch 7, **dadurch gekennzeichnet, dass** der Schraubbolzen (24) mittels einer Kontermutter (26) lagefixierbar ist.

9. Sicherheitsarmatur nach Anspruch 7 oder 8, **dadurch gekennzeichnet, dass** im Bereich des Schraubbolzens (24) eine Einstellskala (25) vorgesehen ist.

10. Sicherheitsarmatur nach einem der Ansprüche 3 bis 9, **dadurch gekennzeichnet, dass** das Rastglied (20) gehärtet ist.

11. Sicherheitsarmatur nach einem der Ansprüche 5 bis 10, **dadurch gekennzeichnet, dass** die dem Sperrkörper (8) zugewandte stirnseitige Öffnung (21) der das Rastglied (20) aufnehmenden Kammer (19) kleiner als der Durchmesser des Rastglieds (20) bemessen ist.

12. Sicherheitsarmatur nach einem der Ansprüche 1 bis 11, **dadurch gekennzeichnet, dass** die Dichtsitze (7) für den Sperrkörper (8) an den neben dem erweiterten Abschnitt (6) des Gehäuses (2) sich erstreckenden Rohrstutzen (3, 4) ausgebildet sind.

13. Sicherheitsarmatur nach einem der Ansprüche 1 bis 12, **dadurch gekennzeichnet, dass** die Dichtsitze (7) oder der Sperrkörper (8) mit Dichtringen versehen sind.

## Claims

1. Safety fitting (1) for integration into a fluid line (FL) with a housing (2) having a straight passage, wherein the housing (2) has two pipe sockets (3, 4) and a widened section (6) between the two pipe sockets (3, 4), wherein the housing (2) is provided with sealing seats (7) for a blocking body (8) that is arranged in the widened section (6) and is clamped on both sides by springs (9) in a neutral centre position as the open position of the safety fitting, and wherein the blocking body (8) is held in the open position by at least one unit (13) that acts transversally to its direction of movement (B), **characterised in that** the unit (13) is a latching unit (13), wherein the latching unit (13) comprises a latching member (20) on which a latching force is applied that, in the mounting position, is adjustable from outside the safety fitting (1).

2. Safety fitting according to claim 1, **characterised in that** two diametrically opposed latching units (13) are provided.

3. Safety fitting according to claim 1 or 2, **characterised in that** each latching unit (13) has a compression spring (18) acting on a spherical latching member (20).

4. Safety fitting according to claim 3, **characterised in that** a recess (23) adapted to the latching member (20) is provided around the circumference of the blocking body (8).

5. Safety fitting according to claim 4, **characterised in that** the recess (23) is configured as a circumferential groove.

6. Safety fitting according to any one of claims 3 to 5, **characterised in that** the latching member (20) is secured in an end-side chamber (19) of a longitudinal sleeve (14) that is attached to the housing (2) transversely to the direction of movement (B) of the blocking body (8), said sleeve also receiving the adjustable compression spring (18) in a longitudinal canal (17).

7. Safety fitting according to any one of claims 3 to 6, **characterised in that** the compression spring (18) can be tensioned by means of a threaded bolt (24) that can be displaced in the longitudinal direction of the sleeve (14).

8. Safety fitting according to claim 7, **characterised in that** the threaded bolt (24) can be fixed in position by means of a counter nut (26).

9. Safety fitting according to claim 7 or 8, **characterised in that** an adjustment scale (25) is provided in the region of the threaded bolt (24).

10. Safety fitting according to any one of claims 3 to 9, **characterised in that** the latching member (20) is hardened.

11. Safety fitting according to any one of claims 5 to 10, **characterised in that** the frontside opening (21) of the chamber (19) receiving the latching member (20) that faces the blocking body (8) is smaller than the diameter of the latching member (20).

12. Safety fitting according to any one of claims 1 to 11, **characterised in that** the sealing seats (7) for the blocking body (8) are formed on the pipe sockets (3, 4) extending next to the widened section (6) of the housing (2).

13. Safety fitting according to any one of claims 1 to 12, **characterised in that** the sealing seats (7) or the blocking body (8) are provided with sealing rings.

## Revendications

1. Ferrure de sécurité (1) destinée à être intégrée dans un conduit de fluide (FL) avec un boîtier (2), qui possède un passage rectiligne, dans laquelle le boîtier (2) possède deux tubulures (3, 4) et une section (6) élargie entre les tubulures (3, 4), dans laquelle le boîtier (2) présente des sièges d'étanchéité (7) pour un corps de fermeture (8), qui est disposé dans la section (6) élargie et qui, enserré de part et d'autre par des ressorts (9), est maintenu dans une position centrale neutre faisant office de position ouverte de la ferrure de sécurité et dans laquelle le corps de fermeture (8) est positionné dans la position d'ouverture par au moins une unité (13) agissant de manière transversale par rapport à sa direction de déplacement (B), **caractérisée en ce que** l'unité (13) est une unité d'enclenchement (13), dans laquelle l'unité d'enclenchement (13) comprend un organe d'enclenchement (20), qui est soumis à l'action d'une force d'enclenchement pouvant être réglée dans la position de montage depuis l'extérieur de la ferrure de sécurité (1).

2. Ferrure de sécurité selon la revendication 1, **caractérisée en ce que** sont prévues deux unités d'enclenchement (13) se faisant face diamétralement.

3. Ferrure de sécurité selon la revendication 1 ou 2, **caractérisée en ce que** chaque unité d'enclenchement (13) présente un ressort de pression (18) agissant sur un organe d'enclenchement (20) présentant une forme de bille.

4. Ferrure de sécurité selon la revendication 3, **caractérisée en ce qu'**un évidement (23) adapté à l'organe d'enclenchement (20) est prévu côté périphérique du corps de fermeture (8).

5. Ferrure de sécurité selon la revendication 4, **caractérisée en ce que** l'évidement (23) est réalisé sous la forme d'une rainure périphérique.

6. Ferrure de sécurité selon l'une quelconque des revendications 3 à 5, **caractérisée en ce que** l'organe d'enclenchement (20) est maintenu de manière imperdable dans une chambre (19) côté extrémité d'une douille (14) allongée fixée au niveau du boîtier (2) de manière transversale par rapport à la direction de déplacement (B) du corps de fermeture (8), laquelle reçoit en outre dans un canal longitudinal (17) le ressort de pression (18) pouvant être réglé.

7. Ferrure de sécurité selon l'une quelconque des revendications 3 à 6, **caractérisée en ce que** le ressort de pression (18) peut être tendu au moyen d'un boulon de vissage (24) pouvant être ajusté dans la direction longitudinale de la douille (14).

8. Ferrure de sécurité selon la revendication 7, **caractérisée en ce que** le boulon de vissage (24) peut être fixé en position au moyen d'un contre-écrou (26).

9. Ferrure de sécurité selon la revendication 7 ou 8, **caractérisée en ce qu'**une échelle de réglage (25) est prévue dans la zone du boulon de vissage (24).

10. Ferrure de sécurité selon l'une quelconque des revendications 3 à 9, **caractérisée en ce que** l'organe d'enclenchement (20) est durci.

11. Ferrure de sécurité selon l'une quelconque des revendications 5 à 10, **caractérisée en ce que** l'ouverture (21) côté frontal tournée vers le corps de fermeture (8) de la chambre (19) recevant l'organe d'enclenchement (20) présente une dimension plus petite que le diamètre de l'organe d'enclenchement (20).

12. Ferrure de sécurité selon l'une quelconque des revendications 1 à 11, **caractérisée en ce que** les sièges d'étanchéité (7) pour le corps de fermeture (8) sont réalisés au niveau des tubulures (3, 4) s'étendant à côté de la section (6) élargie du boîtier (2).

13. Ferrure de sécurité selon l'une quelconque des revendications 1 à 12, **caractérisée en ce que** les sièges d'étanchéité (7) ou le corps de fermeture (8) sont pourvus de bagues d'étanchéité.
